# EUROPEAN PATENT APPLICATION

(11) **EP 2 736 005 A1**
(43) Date of publication of application: **28.05.2014**
(21) Application number: 13163854.6
(22) Date of filing: 16.04.2013
(51) Int. Cl.: G06Q 20/02, G06Q 20/10, G06Q 20/18, G06Q 20/20, G06Q 20/32, G06Q 20/40

(54) **Electronic payment system**

(30) Priority: 21.11.2012 AZ 20120131 U
(71) Applicant: Mahalov, Zakir Ibadullah oglu, AZ1073 Baku (AZ)
(72) Inventor: Mahalov, Zakir Ibadullah oglu, AZ1073-Baku (AZ); Mahalov, Ismail Zakir oglu, AZ1073-Baku (AZ)
(74) Representative: Sloboshanin, Sergej

(57) **Abstract**

The electronic payment system relates to the field of the execution of electronic funds transfer as an alternative means of financial exchange, including the possibility of providing electronic transfer for fiat and non-fiat money, by means of communications devices for funds management, particularly mobile communications devices, and may be used for carrying out all types of current banking and non-banking payment operations.

The object of the technical solution is to provide an electronic payment system which makes optimal use of hardware and software resources and has an optimized structure of rules for executing payment procedures based on an expansion of access to payment services for potential users, while simplifying the possibilities of using payment services for users, and expanding the field of application of the electronic payment system.

The electronic payment system (EPS) includes communications devices for funds management in the form of a mobile telephone, an operator's enquiry and service facility, and a processing unit (PU) constructed so as to receive authentication parameters via communication interfaces, perform authentication, and transfer funds to third parties at the command of the user in the process of execution of data reception and transmission sessions between the functional elements of the EPS, these sessions being carried out by means of USSD, SMS, GPRS, EDGE, Signalling System 7 in PSTNs, or WiMAX interfaces, TCP/IP protocols, X-25, or similar communications standards, protocols or data transfer formats to those mentioned above.

The system further includes an external funds management devices infrastructure unit, an external banking hardware infrastructure unit, and an external automated settlement systems infrastructure unit, constructed to allow interactive data exchange through a communications and data transmission infrastructure unit both among themselves and with the PU.

The PU includes a communications and data transmission subsystem, linked to the communications and data transmission infrastructure unit, a transaction processing server, a database management system, an accounting subsystem, an external infrastructure applications subsystem, a clearing subsystem, an authorization subsystem, an authentication subsystem, residents' register and non-residents' register subsystems, and a hardware elements register subsystem.

The operations centre provides execution of rule-based electronic funds transfer (EFT) processes by interaction with components of the PU structure, while the EPS is constructed so as to be capable of integration with various types of local and international EPS.

## Description

The invention relates to electronic payment systems for the electronic transfer of funds as an alternative means of financial exchange, including the possibility of providing electronic transfer for fiat and non-fiat money, cash, cheques and cards, using communications devices for funds management, particularly mobile communications devices, and it may be used for carrying out all types of current and non-current banking and non-banking payment operations, including those performed in combination with devices for settlement and cash services such as POS terminals, ATMs or the like, and including payment operations using contactless identification technology interacting with automated settlement and billing systems and Internet payment interfaces, with the possibility of associating a mobile telephone, as a funds management device, not only with the accepted personal details of the user but also with the taxpayer's identification number (INN in Russia), enabling funds transactions to be handled in bank accounts and in digital wallets belonging to a payment services user, without the need to use special software applications.

In the course of their development, modern methods of providing electronic funds transfer (EFT), particularly those classed as mobile banking systems, as well as various types of mobile digital wallets, reproduce, in some form or another, the design of solutions, the technical results or functional features of other systems of this type, with insignificant differences. As a result of the practical implementation of technical solutions in this technologically and conceptually identical way, users receive a large number of similar payment services from various payment systems, and this has a negative effect on the efficiency of use of each of the proposed technologies, as well as on the acceptance of services by users, who frequently have to conduct a complicated selective analysis. In view of the major importance at the present time of mobile means of communication and data transfer which are universally available to users, namely mobile telephones and portable computers made to provide the functions of mobile communications and data transfer devices and offering high performance in terms of computation and communication speed, these devices being capable of qualitatively and very efficiently replacing the functions of all types of plastic payment cards while also allowing users to execute a wide range of payment services, it is clearly necessary to optimize the existing technology for EFT provision, including the known mobile banking technologies, both with and without the use of payment card parameter verification systems such as those of VISA/MasterCard, and also with the use of the possibilities offered by RFID/NFC contactless identification technology.

There is a known system of providing services to mobile telephone subscribers (variants), the technical result of which is an expansion of the functional possibilities of systems providing services to mobile telephone subscribers, owing to the possibility of paying for goods and services by any payment system using any mobile telephone, together with the possibility of informing a subscriber of completed payments in real time and the provision of a high level of security in the execution of electronic payments. The system includes at least one mobile telephone with installed software enabling the mobile telephone to be linked to N servers providing services, eCash processing systems connected via a data transmission network, a gateway server for eCash system processing, a gateway server for card issue processing, a gateway server for e-acquisition card processing, at least one eCash processing terminal, at least one card processing terminal, at least one server belonging to a supplier of goods and/or services, at least one ABS (automated banking system) of the subscriber's bank, and at least one ABS of the supplier of goods and/or services (Patent RF 2423020, cl. H04W4/16, G06Q20/00, granted in respect of application no. 2009139308/08 dated 26.01.2009).

The drawbacks of the known system are, in the first place, the limitation of the user base, due to the need to use a special software application for mobile telephones; secondly, the limitation of the access to services imposed by criteria of speed of execution, fault tolerance and security of payment operations because of the less than optimal use of communications hardware, software and interfaces; thirdly, the limitation of the execution of service processes as a whole, due to the use of a complex system of verification codes; fourthly, the limitation of possibilities for users of payment services, due to the restriction to the use of users' funds in bank accounts under the management of payment cards.

The prior art closest to the claimed technical solution is an electronic payment system including communications devices for funds management in the form of a mobile telephone, an enquiry and service facility provided by the operator, and a processing unit constructed so as to receive authentication parameters via communication interfaces, perform authentication, and transfer funds to third parties at the command of the user in the process of execution of data reception and transmission sessions between the functional elements of the EPS (electronic payment system), these sessions being carried out by means of USSD (Unstructured Supplementary Service Data), SMS (Short Message Service), GPRS (General Packet Radio Service), EDGE (Enhanced Data rates for Global Evolution), Signalling System 7 in PSTNs, or WiMAX (Worldwide Interoperability for Microwave Access) interfaces, TCP/IP protocols, X-25, or similar communications standards, protocols or data transfer formats to those mentioned above (Patent RF 76485, cl. G06Q 30/00, granted in respect of application no. 2007117330/22 dated 10.05.2007).

The electronic payment system chosen as the closest prior art has drawbacks in terms of both the non-optimal use of hardware and software and the structure of the rules for carrying out payment procedures, particularly, in the first place, the limitation of access to payment services for potential users of these services, which has an effect on their cost price and is due to the use of prepaid cards with a fixed face value as the equivalent of funds; secondly, the complicated process for using services, due to the use of payment requests in the form of a single command line according to the USSD specification, requiring the user to memorize the formats of payment requests; thirdly, the limited possibilities for users' use of payment services due to the limitations on the use of automated banking service devices other than POS terminals; and fourthly, the limited field of application of the electronic payment system, due to the composition of the elements used.

The object of the claimed technical solution is to provide an electronic payment system which makes optimal use of hardware and software and has an optimized structure of rules for executing payment procedures based on an expansion of access to payment services for potential users, while simplifying the possibilities of using payment services for users, and expanding the field of application of the electronic payment system.

In the known technical solution, which includes communications devices for funds management in the form of a mobile telephone, an enquiry and service facility provided by the operator, and a processing unit (PU) constructed so as to receive authentication parameters via communication interfaces, perform authentication, and transfer funds to third parties at the command of the user in the process of execution of data reception and transmission sessions between the functional elements of the EPS (electronic payment system), these sessions being carried out by means of USSD (Unstructured Supplementary Service Data), SMS (Short Message Service), GPRS (General Packet Radio Service), EDGE (Enhanced Data rates for Global Evolution), Signalling System 7 in PSTNs, or WiMAX (Worldwide Interoperability for Microwave Access) interfaces, TCP/IP protocols, X-25, or similar communications standards, protocols or data transfer formats to those mentioned above, the aforesaid object is achieved in that the system further includes an external infrastructure unit of funds management devices, an external banking hardware infrastructure unit, and an external automated settlement systems infrastructure unit, constructed to allow interactive data exchange through a communications and data transmission infrastructure unit both among themselves and with the processing unit, which includes a communications and data transmission subsystem linked to the communications and data transmission infrastructure unit; a transaction processing server; a database management system; an accounting subsystem; an external infrastructure applications subsystem; a clearing subsystem; an authorization subsystem; an authentication subsystem; a residents' register and non-residents' register subsystem; a hardware elements register subsystem; an operations centre executing rule-based electronic funds transfer (EFT) processes interactively with components of the EPS PU, in the hardware, software and communications environment of which the communication and data transmission subsystem is interconnected with the transaction processing server, which in turn is interconnected with the DBMS which processes data interactively with the accounting, external infrastructure applications, clearing, authorization, authentication, residents' register, non-residents' register and hardware elements subsystems, the EPS being constructed so as to be capable of integration with various types of local and international EPS.

Additionally, the external funds management devices infrastructure includes communications devices for funds management, providing the functions of a mobile telephone according to the GSM/UMTS/CDMA communications standards, and including elements using contactless identification technology, such as RFID/NFC or the like, as well as a software application implemented on the basis of the STK standard, for example, a means of displaying the USSD user interface; the external banking hardware infrastructure unit includes hardware means for automated banking services integrated with the EPS PU via communications software interfaces, capable of issuing cheques, constructed on the basis of POS terminals, ATMs or other specialized automated devices for settlement and cash services, including elements of RFID/NFC technology or the like; and the external automated settlement systems infrastructure unit includes external banking systems, billing systems and processing centres of clients' and partners' structures mutually integrated with the EPS PU, remote automatic and semi-automatic hardware and software settlement systems, the settlement systems used being fixed settlement and cash service points, settlement and cash service points in authorized credit institutions, and authorized settlement and cash service devices, including elements of contactless identification technology of the RFID/NFC or similar type.

The communications and data transmission infrastructure unit also includes a USSD software and hardware combination forming a gateway for processing incoming and outgoing requests and commands according to a standard set of signal protocols for cellular mobile communications under the GSM/UMTS/CDMA standard, these requests and commands being generated by communications devices for funds management (User initiated) and by the EPS PU (Network initiated), while the communications interfaces used additionally include interfaces according to various communications and data transmission standards, enabling the structural elements of the EPS to communicate with each other via the GSM/UMTS/CDMA mobile communications network, via IMT-Advanced local wireless network systems, via PSTNs in combination with IVR systems, fibre optical data transmission channels, or other wired and wireless communications and data transmission channels which are functionally similar to the aforementioned, providing remote interaction according to various protocols, also including the HTTP application-level data transmission protocol, the SMPP specification protocol, the SMPP Developers' Forum protocol for interaction of external applications with elements of the infrastructure of cellular mobile communications network operators, and the SOAP protocol for the exchange of structured messages in a distributed computing environment. Additionally, the PU, being a software and hardware combination with cluster architecture, is composed of hardware and software components interacting with each other in a single environment of servers and databases under the control of the operations centre according to the hierarchy of priorities for the execution of functional tasks imposed by the architecture of the PU and the functional rules of the system, including automatic interchangeability of communications and data transmission interfaces for the execution of EFT. The communications and data transmission subsystem of the PU, having a middle hierarchical priority level in the PU structure, is constructed so as to be capable of coordinating the uninterrupted interaction of elements of the external infrastructure environment of the EPS with the PU, the structural components of the PU and the communications networks, local control of the state of the communication and data transmission networks, including Internet channels, and integrated external sources of service applications, including the provision of service procedures through the Internet interface, for the execution of the EFT process and its associated electronic document exchange, and it also includes an operator's enquiry and service facility with an interactive automated voice guidance system, the interactive automated voice guidance system taking the form of an IVR system, included in the hardware and software of the operator's enquiry and service facility, the communications network taking the form of GSM/UMTS/CDMA and PSTN networks, for example, and the integrated external sources of service applications taking the form of services sources based on VoIP or RFID/NFC technology, for example.

Additionally, the operations centre, being a software environment with a high hierarchical priority level in the structure of the EPS PU, is constructed so as to be capable of executing the functional rules of the EFT in the interaction of the structural components of the EPS PU, including monitoring the rule-based processes, payment requests, the state of the hardware, software and communications components of the system, providing failure protection against software and hardware faults, and renewing software in all elements of the system; the transaction processing server, having a middle hierarchical priority level in the PU structure, is constructed so as to be capable of receiving and processing the data required for the formation of payments and accounting statements specified by the functional rules of the system, by interaction with the structural components of the PU, including informing all user groups of the system of the outcomes of completed payments from balance indicators of their electronic accounts; the database management system, having a middle hierarchical priority in the PU structure, is constructed so as to be capable of providing integration of the structural components of the PU with the databases and managing servers according to the functional rules for the provision of EFT; the accounting subsystem, having a middle hierarchical priority in the PU structure, is constructed so as to be capable of identifying users, authenticating the EFT management devices, authorizing transactions, checking account balances of system users, forming and recording information on payment procedures provided to users by the system, by interaction with the transaction processing server; the external infrastructure applications subsystem, having a middle hierarchical priority in the PU structure, is constructed so as to be capable of providing EFT by interaction with external hardware and software elements of the EPS infrastructure, including hardware identification of the service user and acceptance, arranging and executing payment requests, providing interaction of the EPS PU with mutually integrated external infrastructures of banking systems and hardware and software settlement systems; the authorization subsystem, having a middle hierarchical priority in the PU structure, includes a database of user authorization parameters associated with communications devices for funds management, together with identification and authentication parameters of other payment systems specified by the EPS security rules for the execution of EFT, the other payment systems taking the form of Visa/MasterCard and similar systems, for example.

Additionally, the authentication subsystem, having the lowest hierarchical priority in the PU structure, is constructed so as to be capable of authenticating the user, or an element of the external banking hardware infrastructure of the EPS associated with the user, on the basis of authentication parameters and operations specified by the security rules of the EPS, the authentication parameters used being, for example, a password, an electronic digital signature (EDS), an encryption key, a checksum and/or other parameters specified by the functional rules of the EPS.

Furthermore, the residents' register subsystem, having the lowest hierarchical priority level in the PU structure, includes a database of payment services users registered according to the recording rules of the local EPS, and their associated communications devices for funds management belonging to resident users, including information on each resident user concerning executed payment operations, the present location and state of accounts, and is constructed so as to be capable of recording them according to identification parameters in accordance with the functional rules of the EPS, the identification parameters used being, for example, SIM parameters, associated with the user's electronic account in the system and/or IMSI, TMSI or IMEI parameters.

Additionally, the non-residents' register subsystem, having the lowest hierarchical priority level in the PU structure, includes a database of payment services users registered according to the recording rules of the local EPS, and their associated communications devices for funds management belonging to non-resident users, including information on payment operations executed by each non-resident user, the present location and state of his electronic accounts in the system, required in order to comply with the functional rules of the EPS, and constructed so as to be capable of keeping records of identification parameters associated with the non-resident user, while the identification parameters of the resident and non-resident users include prefixes of SIM card numbers associated with the communications devices for funds management declared as the user's identifier at the time of registration in the electronic account in the EPS.

Furthermore, the hardware elements register subsystem, having the lowest hierarchical priority level in the PU structure, includes a database of the identification parameters of the elements of the external banking hardware infrastructure of the EPS and the external funds management devices infrastructure, with the capability of creating three lists during the execution of EFT, according to the rules on counteracting the illegal exchange of funds, classifying the identifiers of said hardware elements and funds management devices, namely a "white list", signifying "use permitted", a "grey list", signifying "some problems with the rules for use", and a "black list", signifying "use prohibited"; the clearing subsystem, having a middle hierarchical priority level in the PU structure, includes a database for clearing requests and reports and is constructed so as to be capable of providing mutual settlements according to financial circumstances between the EPS and the EFT subjects from among elements of the external automated accounting systems infrastructure, in accordance with the clearing rules established for participants in EFT, on the basis of clearing requests/reports generated by the subsystem in the process of execution of EFT, including their storage and modification in the database, and also transmission, according to the rules for execution of EFT to mutually integrated clearing or settlement systems of elements of the external automated settlement systems of the EPS for the execution of direct bank transactions.

By constructing an electronic payment system in the form of a system of technical means enabling the functional rules of EFT to be implemented, with an architecture of 17 units of hardware, software and communications components interacting with each other in accordance with a specified structure of hierarchical priorities, it is possible to make optimal use of the hardware and software and the structure of the rules for the execution of payment procedures, to expand access to payment services for potential users, to simplify the process of using the services, to expand the possibilities of the use of payment services by users, and to expand the field of application of the electronic payment system, particularly by using additional modern technological options with interaction in the environment of the electronic payment system infrastructure, such as elements of RFID or NFC technology for organizing automated provision of payment services to users, while also increasing the security of processes for executing payment operations.

Additionally, the interchangeability of technical means in the processing structure or organization of electronic funds exchange further expands the possibilities available to users for executing payment operations and improves the fault tolerance characteristics of the whole system.

The abbreviations, meanings and definitions of terms used in the description are given below.
PU: processing unit
DBMS: database management system
EPS: electronic payment system
ESS: electronic settlement system
EDS: electronic digital signature
ATM: automated teller machine (an automated banking facility, in the form of a software and hardware combination designed to allow automated issue and acceptance of cash funds, with or without the use of payment cards, and the performance of other operations including payment for goods and services and the creation of documents confirming the corresponding operations)
CDMA: Code Division Multiple Access (a communications technology, usually used for radio communications, in which the transmission channels have a common frequency band but different code modulations)
CTI: Computer Telephony Integration (a technology for integrating computers and conventional telephone networks)
EDGE: Enhanced Data rates for Global Evolution (a digital wireless data transmission technology for mobile communications, operating as a superset of the 2G and 2.5G (GPRS) networks)
EFT: Electronic Funds Transfer (system for the electronic transfer of funds)
GPRS: General Packet Radio Service (a service for packet transmission of data on a radio channel for high-speed transmission using existing GSM networks)
GSM: Global System for Mobile Communications (a global standard for digital cellular mobile communications with time and frequency divided channels)
HTTP: HyperText Transfer Protocol (an application-level protocol for the transmission of data, originally in the form of hypertext documents)
IETF: The Internet Engineering Task Force (an open international association of designers, scientists, network operators and providers, concerned with the development of protocols and Internet architecture)
IMEI: International Mobile Equipment Identity (an international identifier for mobile equipment, in the form of a unique number for each piece of equipment using it)
IMSI: International Mobile Subscriber Identity (an international identifier of a mobile subscriber (individual subscriber number), associated with each user of mobile communications according to the GSM, UMTS or CDMA standard)
IMT-Advanced: International Mobile Telecommunications-Advanced (advanced international mobile telecommunications systems, providing access to a broad selection of telecommunications services, including advanced mobile services, and supporting a wide range of data transmission speeds, matched to users' requirements)
IP: Internet Protocol (an Internet protocol relating to network-level routing protocols of the TCP/IP family and uniting individual subnetworks in the World Wide Web, network addressing being an essential part of this protocol)
IVR: Interactive Voice Response (a system of previously recorded voice messages, with the function of routing calls in a call centre, using information input by the client on a telephone keypad with the aid of tone dialling)
NFC: Near Field Communication (a high-frequency wireless communication technology with a small operating radius, enabling data to be exchanged between devices located about 10 centimetres apart)
POS: Point Of Sale (the place of sale)
POS terminal (Point Of Sale terminal): a trading terminal (software and hardware combination for trading or automated cashier machine, installed at the point where a cashier receives payment from customers; in the context of the present description, this includes standard POS terminals, both those including elements of RFID/NFC contactless identification technology and earlier versions, which receive payments using plastic payment cards of international payment systems of various types such as VISA/MasterCard)
PSTN: Public Switched Telephone Network (telephone network for public use, i.e. a network accessed by means of wired telephones, small PBXs and data transmission equipment)
RFID: Radio Frequency Identification (a method for automatic identification of objects, in which data stored in so-called transponders or RFID labels are read or written by means of radio signals)
SIM: Subscriber Identification Module (a module for identifying the subscriber, used in mobile communications)
STK: SIM Tool Kit (a standard supporting the use of applications supplied by the operator and pre-installed on modern SIM cards)
SMPP: Short Message Peer to Peer Protocol (protocol describing the interaction of the end customer with an SMS server; used for SMS and USSD message transmission)
SMS: Short Message Service (a technology for receiving and transmitting short text messages by mobile telephone)
SOAP: Simple Object Access Protocol (a protocol for the exchange of structured messages in a distributed computing environment)
TCP: Transmission Control Protocol (one of the main Internet network protocols, designed to control data transmission in TCP/IP networks and subnetworks)
TMSI: Temporary Mobile Subscriber Identity (temporary identifier of a mobile communications subscriber, intended solely to increase the security of interaction of a subscriber with the network; it may change periodically)
UMTS: Universal Mobile Telecommunications System (a cellular communications technology developed by the European Telecommunications Standards Institute (ETSI) for the introduction of 3G networks)
USSD: Unstructured Supplementary Service Data (standard service in GSM networks, for organizing interaction between a network subscriber and a service application in short message transmission mode)
VoIP: Voice over IP (general term for communications protocols, technologies and methods for transmitting voice signals over the Internet or any other IP networks)
WiMAX: Worldwide Interoperability for Microwave Access (telecommunications technology developed to provide universal wireless communication over long distances for a wide range of devices, from workstations and portable computers to mobile telephones)
W3C: World Wide Web Consortium (organization developing and introducing technological standards for the World Wide Web)
XFS: Extensions for Financial Services (a standard for client-server architecture for financial applications on a Microsoft Windows platform, initially orientated towards software for peripheral devices used in the financial field, such as POS terminals and ATMs)
X.25: a family of channel-level protocols of the OSI network model, orientated towards operations for setting up connections.

The invention will be explained with the aid of a drawing showing a block diagram of the system structure.

The system is composed of a funds management devices infrastructure 1, an external banking hardware infrastructure 2, an external automated settlement systems infrastructure 3, a communications and data transmission infrastructure 4, and a processing unit 5, including a communications and data transmission subsystem 6, an operations centre 7, a transaction processing server 8, a database management system 9, an accounting subsystem 10, an external infrastructure applications subsystem 11, an authorization subsystem 12, an authentication subsystem 13, a residents' register subsystem 14, a non-residents' register subsystem 15, a hardware elements register subsystem 16, and a clearing subsystem 17.

The functional specification of the EPS is described below:
1. The external funds management devices infrastructure includes software and hardware communications and data transmission devices, particularly mobile telephones operating on the GSM/UMTS/CDMA standards, constructed so as to be capable of managing funds, including funds management devices incorporating elements of RFID/NFC contactless identification technology, together with a software application based on the SIM Tool Kit (STK), for example, as a means of displaying the USSD user interface.
2. The external banking hardware infrastructure includes hardware integrated with the EPS PU via software interfaces, for providing automated banking service with a cheque issuing facility, constructed on the basis of POS terminals, ATMs, or other specialized automated settlement and cash service devices, including elements of RFID/NFC technology, wherein the devices may be constructed with standard service functions for known types of bank payment cards, a tax register, and a cheque printing facility, and may contain a communications module for data exchange with the EPS PU.
3. Additionally, the external automated settlement systems infrastructure includes external banking systems, billing systems and processing centres of clients' and partners' structures mutually integrated with the EPS PU, remote automatic and semi-automatic hardware and software settlement systems (fixed settlement and cash service points, settlement and cash service points in authorized credit institutions, and authorized settlement and cash service devices), including elements of contactless identification technology of the NFC/RFID or similar type.
4. The communications and data transmission infrastructure includes communications interfaces according to various communications and data transmission standards in a single communications and data transmission subsystem environment, linked to the EPS PU, providing communications interaction among the structural elements of the EPS, by means of: GSM/UMTS/CDMA mobile communications networks and their standard communications and data transmission interfaces, such as SMS, USSD, GPRS and EDGE; local wireless networks based on the IEEE 802.11, IEEE 802.16 and IMT-Advanced standards; PSTN networks; fibre optic data transmission channels, or other wired and wireless communications and data transmission channels which are functionally similar to the aforementioned, providing remote interaction according to various protocols, including TCP/IP, providing a range of data transmission protocols in data transmission networks, developed by the IETF and described by the RFC 793 standard (for TCP) and the RFC 791 standard (for IP), HTTP, an application-level data transmission protocol described by the IETF RFC 2616 standards, SMPP, the special SMPP protocol for interaction of external applications with elements of the infrastructure of cellular mobile communications network operators, and SOAP, a protocol for the exchange of structured messages in a distributed computing environment, developed by W3C and described by the SOAP Version 1.2 specification; at least one USSD gateway, operating by interaction with GSM/UMTS/CDMA communications systems, forming a software and hardware combination linked to the EPS PU, for processing outgoing and incoming requests and commands according to a standard set of signal protocols for cellular mobile communications networks according to the GSM/UMTS standard in the USSD session format, where USSD is a method of requesting additional services in GSM/UMTS cellular mobile communications networks, enabling a USSD session to be established, the session being generated either by funds management devices, i.e. a "User initiated" session, or by the EPS PU through the USSD gateway, i.e. a "Network initiated" session.
5. The PU is a hardware and software combination with a cluster architecture having duplicated wired and wireless communications and data transmission interfaces, allowing communication and information transmission among the structural elements of the EPS, and using a combination of processes to process the incoming data and those generated within the structure of the PU, from which the technical result, namely the EFT, is derived.
6. The communications and data transmission subsystem includes a communications server controlling a specific geographical area of operation of local GSM/UMTS/CDMA and PSTN communications and data transmission networks, including a local Internet segment with elements of the EPS infrastructure located within its boundaries. It processes incoming and outgoing payment and other rule-based requests and commands. It provides an interface for interaction among GSM/UMTS/CDMA and PSTN networks, radio communication networks, structural components of the PU, mutually integrated PUs of external payment or billing systems, and integrated external sources of service applications such as VoIP and RFID/NFC. It performs the functions of routing payment requests, controlling calls, transferring services by relaying when a funds management device moves from one communications environment to another or in the case of exceptional interchangeability of the main communications interfaces with backup interfaces; it collects statistical data and telemetry data and distributes these data flows in real time through the transaction processing server among other structural components of the PU. The subsystem also carries out dynamic monitoring of the location of the structural elements of the EPS, using data from corresponding registers, as required in order to provide an efficient service to the EPS users, to comply with the EPS security rules and to provide emergency technical support for the service. The subsystem includes an operator service and a call centre, in the form of a combination of hardware and software resources for computer telephony (CTI), including an IVR system interacting with the PU, including manually controlled elements, designed to provide mediated correct execution of payment procedures by users of the EPS who for technical and natural reasons are unable to carry out payment or other procedures independently; it also includes a web portal subsystem for providing functions of user registration, payment operations and other service procedures via Internet interfaces. According to the functional rules, these procedures relating to payments include not only the formation of payment requests and the execution of direct payments, but also the provision of conversion of funds, transfer and crediting of funds to accounts outside the system held by the user or third parties, the reception of electronic accounting forms, operations with e-commerce and e-government portals external to the PU and mutally integrated with the EPS, and other sources of electronic document exchange important for the process of executing EFT. The subsystem has a middle hierarchical priority level in the PU structure.
7. The operations centre is a software environment with the highest hierarchical priority level in the PU structure, providing implementation of the rule-based processes of EFT by interaction with the components of the EPS PU structure. It includes an operation and technical servicing module, interacting with the structural components of the PU, and providing monitoring and administration of the rule-based processes in the PU, while also providing failure protection against software and hardware faults. It processes failure signals which require intervention by personnel and/or activation of the failure protection rules, monitors incoming payment requests according to specified error parameters and monitors the reaction of structural components of the PU, provides dynamic verification of the state of the hardware, software and communications infrastructures of the system, renews the software of all elements of the system and performs a number of second-degree functions. It includes a data backup module, carrying out processes of collection, dynamic renewal, archiving and storage of all data sets generated during the execution of EFT. It also includes a cluster synchronization module, providing synchronization of the interaction of the data backup subsystems in combination with the rules to be implemented concerning exceptional activation of the cluster functions, as an emergency backup for the EPS.
8. The transaction processing server executes processes of data reception and processing required for the formation of payments and accounting statements specified by the functional rules of the EPS, forms payments, generates commands for the execution of procedures to inform all user groups of the EPS of the outcomes of processes on completion of payments and of the balance indicators for their electronic accounts, and in general enables the EPS to interact with service users and with elements of the infrastructure environment of the EPS. The server has a middle hierarchical priority level in the PU structure.
9. During the execution of EFT, the DBMS is responsible for providing processes of interaction of the controlling servers with the databases of the PU subsystems, according to the functional rules for the interaction of structural components of the PU. The DBMS has a middle hierarchical priority level in the PU structure.
10. The accounting subsystem is responsible for executing processes of user identification, authentication of EFT management devices, authorization of transactions, recording and monitoring the state of balance indicators of accounts of EPS users, and formation and recording of information on payment procedures and payment documents to be supplied to users and other parties in payment operations by the EPS, and also for the execution of other ancillary and auxiliary EFT execution procedures according to the functional rules of the EPS, as a result of the process of data exchange among the specialized subsystems of the PU under the control of the transaction processing server. The subsystem has a middle hierarchical priority level in the PU structure.
11. The external infrastructure applications subsystem provides processes for executing the payment cycle by interaction with external hardware and software elements of the EPS infrastructure used for the automation of payment procedures, such as hardware identification of the service user and the acceptance required by the service rules or the user, and procedures for automatic formation and execution of the payment request by interaction with other elements of the infrastructure of the EPS (operations of the PayPass type), while also providing interaction of the EPS PU with mutually integrated external banking and billing systems and processing centres of clients' and partners' structures, particularly for providing execution of VoIP service processes, remote automatic and semi-automatic hardware and software settlement combinations (fixed settlement and cash service points, settlement and cash service points in authorized credit institutions, and authorized settlement and cash service devices), including elements of RFID/NFC contactless identification technology, or similar elements. The subsystem has a middle hierarchical priority level in the PU structure.
12. The authorization subsystem includes a database of authorization parameters for payment procedures, associated with identifiers of funds management devices, which in turn are associated with auxiliary or other possible data, for example the user's personal data, payment authorization parameters in Visa/MasterCard systems or similar, and other verification parameters specified for use in the EFT execution process by the security rules of the EPS. The subsystem has a middle hierarchical priority level in the PU structure.
13. The authentication subsystem provides execution of the authentication of the funds management device, or of the element of the external banking hardware infrastructure of the EPS, associated with the user, on the basis of specified authentication parameters, as well as operations specified by the security rules of the EPS and taking the form of a procedure for checking the authenticity of the party to the request, for example by checking the authenticity of the user by comparing a password input by the user with a password in the database of the authentication subsystem; confirmation of the authenticity of an electronic document by checking the digital signature of an incoming request using the sender's encryption key; and checking the checksum of an incoming request for conformity with a sum stated by the initiator of the request. Access to services or interaction with the EPS is permitted after due authentication of the requesting funds management device or element of the external banking hardware infrastructure associated with the user, for each dialogue session in the process of execution of a payment or information request, different scenarios being created for providing services to parties to a request or their interaction with elements of the external banking infrastructure being provided according nature of the incoming data and the data contained in the database registers of the PU. The subsystem has the lowest hierarchical priority level in the PU structure.
14. The residents' register includes a database of resident users of payment services who are assigned to (registered in) the PU of the local EPS, and their associated elements of the external infrastructure of funds management devices of the EPS. The subsystem includes information on payment operations completed by each resident user, and on payment operations completed by them using elements of the local EPS infrastructure, as well as information on the current location of each resident user and the state of his accounts in the EPS, this information being required for the implementation of the functional rules of the EPS and the provision of EFT security. The subsystem can keep records, both according to the basic identification parameters of the SIM card associated with the user's electronic account, and according to the IMSI/TMSI or the IMEI, used for subscriber authentication in GSM/UMTS/CDMA networks. Each user of the payment services is assigned to a local register according to the recording rules of the EPS. Each register can be accessed by all subsystems of the PU through the transaction processing server, and, if inter-system roaming is provided, by the PUs of identical partner EPS systems. The subsystem has the lowest hierarchical priority level in the PU structure.
15. The non-residents' register includes a database of non-resident users of payment services who are assigned to the PU of the local EPS, and their associated elements of the external infrastructure of funds management devices. The subsystem distinguishes the two categories of user by the prefixes of the SIM numbers of the communications devices for funds management, stated as the users' identifiers on registration or on the submission of a payment request to the local EPS. The subsystem includes information on payment operations completed through the local EPS by each non-resident user, and on payment operations completed using elements of the non-resident EPS infrastructure, as well as information on the current location of each non-resident user and the state of his accounts in the local EPS, this information being required for the implementation of the functional rules of the EPS and the provision of EFT security. The subsystem keeps records according to the basic identification parameters associated with the non-resident users according to the recording rules of the EPS. Each user registered in the local EPS and using payment services of a non-local EPS, and/or each subscriber to a non-local GSM/UMTS/CDMA communications network, is assigned to a local non-residents' register. The data in the register can be accessed by all subsystems of the PU, and, if inter-system roaming is provided, by the PUs of identical EPS systems. The subsystem has the lowest hierarchical priority level in the PU structure.
16. The hardware elements register subsystem includes a database of the identification parameters of the elements of the external banking hardware infrastructure of the EPS and of the external funds management devices infrastructure. During the execution of EFT, it creates three lists, according to the rules for counteracting illegal funds, classifying the identifiers of said hardware elements and funds management devices according to the following criteria: "white" (use permitted), "grey" (some problems with the rules for use), and "black" (use prohibited), and provides secure execution of payment procedures and technical support procedures by interaction with other subsystems of the PU. The subsystem has the lowest hierarchical priority level in the PU structure.
17. The clearing subsystem provides execution of the processes of mutual settlement according to financial circumstances between the EPS and the parties to EFT from a number of the elements of the external automated settlement systems infrastructure according to the outcomes for the settlement period as required by the clearing rules specified for the parties to EFT. The clearing processing is executed both independently and by interaction with the clearing or settlement systems of similar and/or identical PUs in the electronic payment cycle environment of the network of mutually integrated EPS or ESS systems. The subsystem keeps and modifies in the database the clearing requests/reports generated during the execution of EFT by interaction with other databases of the PU, and also sends them according to the EFT execution rules to the mutually integrated clearing or settlement systems of the infrastructure environment of the EPS, on the basis of which the direct banking transactions take place according to the mutual settlements between the parties to the EFT. The subsystem has a middle hierarchical priority level in the PU structure.

In accordance with the object of the present invention, a basic specification of the EFT processes implemented by the EPS will also be given.

The external funds management devices infrastructure unit 1 is constructed so as to be capable of interacting with the PU 5, through the communications and data transmission infrastructure unit 4, linked to the communications and data transmission subsystem unit 6.

Said interaction of the elements of the infrastructure 1 with the PU 5 is implemented so as to allow interactive data exchange through the infrastructure 4 with the elements of the external banking hardware infrastructure 2, the elements of the external automated settlement systems infrastructure 3, and the components of the PU 5, the data exchange sessions being capable of being initiated both by the elements of the infrastructure 1 and by the elements of the infrastructures 2 and 3 and the components of the PU 5, according to the functional rules of the EPS.

The external banking hardware infrastructure unit 2 is constructed so as to be capable of interacting with the PU 5, through the infrastructure unit 4 linked to the communications and data transmission subsystem unit 6.

Said interaction of the elements of the infrastructure 2 with the PU 5 is implemented so as to allow interactive data exchange through the infrastructure 4 with the elements of the infrastructure 1, the elements of the infrastructure 3, and the components of the PU 5, the data exchange sessions being capable of being initiated both by the elements of the infrastructure 2 and by the elements of the infrastructures 1 and 3 and the components of the PU 5, according to the functional rules of the EPS.

The external automated settlement systems infrastructure unit 3 is constructed so as to be capable of interacting with the PU 5, through the infrastructure unit 4 linked to the communications and data transmission subsystem unit 6.

Said interaction of the elements of the infrastructure 3 with the PU 5 is implemented so as to allow interactive data exchange through the infrastructure 4 with the elements of the infrastructure 1, the elements of the infrastructure 2, and the components of the PU 5, the data exchange sessions being capable of being initiated both by the elements of the infrastructure 3 and by the elements of the infrastructures 1 and 2 and the components of the PU 5, according to the functional rules of the EPS.

The elements of the infrastructure units 2 and 3 are constructed so as to be linked through communications software interfaces according to the principles governing the XFS or similar standards, for the execution of processes independently of external processing systems, although these processes are created by the EFT monitoring and control PU 5 independently of the processes executed during the parallel interaction of said elements with external processing systems.

The elements of units 1, 2 and 3 are constructed so as to be capable of direct and unmediated interaction through the PU 5, during the use of the elements of RFID/NFC contactless identification technology linked with them, for example during offline/online operations based on specified functional rules of the EPS for a given type of payment operation with the possibility of real-time monitoring and control of the processes by the PU 5.

The communications and data transmission infrastructure unit 4 is constructed so as to be linked to the communications and data transmission subsystem unit 6 and to be capable of interaction with elements of unit 1 through the USSD gateway and other standard components of GSM/UMTS/CDMA standard communications systems, and also with elements of units 2 and 3 through main and auxiliary (reserve) wired and wireless interfaces enabling said structural elements of the EPS to exchange data with unit 5 and elements of unit 1, on the basis of corresponding protocols indicated in the functional specification of the EPS structure.

The PU 5 is composed of hardware and software components interacting with each other in a single environment of servers and databases under the control of the operations centre unit 7 according to the hierarchy of priorities imposed by the architecture of the PU and the functional rules of the EPS.

In functional terms, the PU 5 is constructed so as to be capable of interacting with the elements of units 1, 2 and 3 through the elements of the infrastructure unit 4, interacting with the PU 5 through the communications and data transmission subsystem unit 6.

The transaction processing server unit 8 is constructed according to the hierarchy imposed by the functional rules of the EPS, by interaction with the DBMS unit 9, which is the central component controlling the processes of data exchange with the components of the middle hierarchical priority level in the PU structure, namely the accounting subsystem unit 10, the external infrastructure applications subsystem unit 11, and the clearing subsystem unit 17; and also with the subsystems having the lowest priority level in the PU structure, namely the authorization subsystem unit 12, the authentication subsystem unit 13, the residents' register unit 14, the non-residents' register unit 15, and the hardware elements register unit 16.

Units 6, 8, 9, 10, 11 and 17 of the PU structure are constructed so as to be capable of decision-making under the control of the unit 7, in accordance with the functional rules of the EPS, the unit 8 being constructed in the form of a controlling component in the structure of the PU 5.

Units 10, 11 and 17 of the structure of the PU 5 are constructed to comply with the functional rules for real time operation and also so as to be capable of generating rule-based requests, commands and notifications to be sent to units 1, 2 and 3, as a result of deferred or unforeseen EFT tasks and processes.

Units 12, 13, 14, 15 and 16 of the structure of the PU 5 are constructed as passive components, operating under the control of the unit 9.

The EFT execution process in question is initiated by an element of the funds management devices infrastructure 1, for example a mobile telephone, by means of which a dialogue is activated through the communications and data transmission infrastructure component 4, for example a USSD gateway, with the PU 5 by means of the communications and data transmission subsystem 6. The process of activating the dialogue between the infrastructure device 1 and the PU 5 is initiated by a transmission of a rule-based command known to the user for activation of the USSD dialogue session by inputting and sending a command line of digits and symbols, for example "*111#". The USSD gateway, integrated into the infrastructure 4, transmits the converted request for activation of the dialogue with the PU 5 to the subsystem 6, after which this request is forwarded to the transaction processing server 8, while the subsystem 6 switches to a mode of waiting for a reply from the server 8 to the registered external request. The server 8 breaks down the incoming user request into its component parts and transmits a group of requests specified by the functional rules to the DBMS 9. According to the component parameters of the incoming request, each request to the DBMS 9 is sent for analysis and for delivering to the server 8 the result of the analysis as a result of the interaction of the DBMS 9 with the subsystems 13, 14, 15 and 16. The responses of the subsystems 13, 14, 15 and 16 to the DBMS 9 are the result of a process of request processing, said result being based on a multifactorial analysis and processing of the data contained in the databases of said subsystems, according to the rules of the EPS. The DBMS 9 creates a data set from the responses received, according to the functional rules of the EPS, and sends it to the server 8. The server 8 analysis the received data and, if the outcome of the analysis corresponding to the type of user request is positive, issues through the subsystem 6 a command for the activation of dialogue between the party to the request and the PU 5. The subsystem 6 keeps the information exchange session with the server 8 open and forwards the command for opening the dialogue session to the USSD gateway of the infrastructure 4, which sends to the funds management device of the infrastructure 1 a data set converted into a graphic menu in the structure of this device, appearing on the display of the funds management device of the infrastructure 1, with the service information of the EPS, providing the user with a list of payment services and the rule-based instructions for executing payment procedures, as well as a command line.

During the open dialogue of the funds management device of the infrastructure 1 with the PU 5, an information exchange takes place between the EPS and the user, the sequence of execution of which is determined by a list of criteria in accordance with the functional rules of the EPS. The information exchange between the device of the infrastructure 1 and the PU 5 takes place in the process of the sequential group access of the server 8 through the DBMS 9 to the subsystems 10, 12, 13, 14, 15 and 16. In its turn, the positive conclusion of the process of information exchange between the PU 5 and the device of the infrastructure 1 initiates a sequential information exchange between the PU 5 and an element of the infrastructure 3, and between the element of the infrastructure 3 and the subsystem 17 according to the functional rules of the EPS.

The processing of the user request under the control of the server 8 during the information exchange with the subsystems 10, 12, 13, 14, 15, and 16 in respect of the service request to the PU 5 initiated by the device of the infrastructure 1 takes place as a result of the execution of the following rule-based operations:
- A user authentication request, associated with the funds management device of the infrastructure 1, made to the authentication subsystem 13, where authentication takes place on the basis of data contained in the structure of the request input into the server 8 initiating the dialogue session.
- A request to the residents' register subsystem 14, specifying the current location of the user, the processing of the request determining the logic of the execution of the service requested by the user according to the actual location of the user.
- A request to the non-residents' register subsystem 15, specifying the current location of the user, the processing of the request determining the logic of the execution of the service requested by the user according to the actual location of the user, and also taking into account other criteria affecting the logic of the execution of the service requested by the user.
- A request to the hardware elements register subsystem 16, specifying the current status of the user in a scoring analysis code, the processing of the request determining the level of access of the user to the service resources of the EPS according to the "white", "grey" and "black" lists of the subsystem database in accordance with the security rules, together with other data included in the structure of the final data set created by the DBMS 9 and forwarded to the server 8 for decision-making.
- A request to the accounting subsystem 10, specifying the state of the user's account in the EPS, the processing of the request determining the execution of the optimal scenario for serving the user and enabling the time metering for the dialogue session to be reduced.
- A request to the authorization subsystem 12, completing the payment procedure by the user's transmission, by means of the funds management device of the infrastructure 1, of the authorization parameters for the payment to the PU 5 in response to a request by the EPS to confirm the payment by entering the parameters of its authorization known to the user.

If an intra-system payment operation is executed between two funds management devices of the infrastructure 1, the sequence of implementation of the rules for payment operation remains unchanged, except in cases where one of the devices of the infrastructure 1 is associated with the user's tax identifier. In these cases, the processing of the user request also includes a process of information exchange with elements of the infrastructure 3, for example a special tax accounting system.

If the user carries out a payment operation by means of an element of the infrastructure 2, for example a POS terminal or ATM, the processing of the user request also includes a process of information exchange with an element of the infrastructure 3, for example linked banking systems for monitoring the hardware infrastructure and accounting.

If the user carries out a payment operation by means of an element of the infrastructure 2, for example a POS terminal or ATM, linked to RFID/NFC contactless identification technology components, the processing of the user request also includes a process of information exchange with the external infrastructure applications subsystem 11.

If the user carries out a payment operation in the absence of the USSD interface for interaction of the communications device of the infrastructure 1 with the PU 5, including cases in which payment operations are executed by interaction with elements of the infrastructure 2, the subsystem 6, in the mode according to the implemented rules for interchangeability of communications interfaces of the EPS, activates the reserve communications resources of the EPS, for example the SMS interface.

If a payment operation of a device of the infrastructure 1 is carried out by direct interaction with an automated settlement and cash service device of the infrastructure 2, for example a POS terminal or automated settlement and cash combination with turnstile functions, including RFID/NFC contactless identification technology elements or similar, the processing of the user request is initiated by the device of the infrastructure 2, and also includes the subsystems 11 and 17 in the information exchange process, as well as an element of the infrastructure 3, for example a billing system for contactless payments.

It will be evident to those skilled in the art of electronic settlement that different variant embodiments and modifications may be provided within the spirit and scope of the present invention. Accordingly, the disclosures, description and drawings provided above are given purely for explanatory purposes and without any limiting effect on the present invention, which is limited solely by the claims.

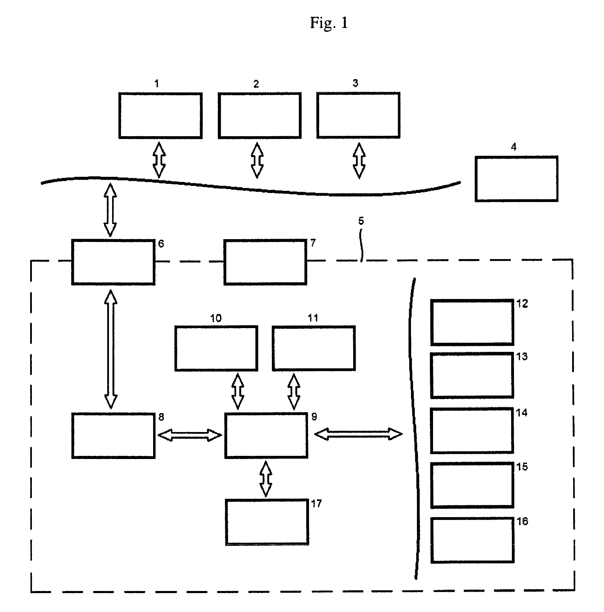

## Claims

1. Electronic payment system (EPS), including communications devices for funds management in the form of a mobile telephone, an enquiry and service facility provided by the operator, and a processing unit (PU) constructed so as to receive authentication parameters via communication interfaces, perform authentication, and transfer funds to third parties at the command of the user in the process of execution of data reception and transmission sessions among the functional elements of the EPS, these sessions being carried out by means of USSD, SMS, GPRS, EDGE, Signalling System 7 in PSTNs, and WiMAX interfaces, TCP/IP protocols, X-25, or similar communications standards, protocols or data transfer formats to those mentioned above, **characterized in that** the system further includes an external funds management devices infrastructure unit, an external banking hardware infrastructure unit, and an external automated settlement systems infrastructure unit, constructed to allow interactive data exchange through a communications and data transmission infrastructure unit both among themselves and with the PU, which includes a communications and data transmission subsystem linked to the communications and data transmission infrastructure unit; a transaction processing server; a database management system; an accounting subsystem; an external infrastructure applications subsystem; a clearing subsystem; an authorization subsystem; an authentication subsystem; residents' register and non-residents' register subsystems; a hardware elements register subsystem; an operations centre executing rule-based electronic funds transfer (EFT) processes by interaction with components of the structure of the PU, in the hardware, software and communications environment of which the communications and data transmission subsystem is interconnected with the transaction processing server, which in turn is interconnected with the database management system which processes data by interaction with the accounting, external infrastructure applications, clearing, authorization, authentication residents' register, non-residents' register and hardware elements subsystems, the EPS being constructed so as to be capable of integration with various types of local and international EPS systems.

2. EPS according to Claim 1, **characterized in that** the external funds management devices infrastructure unit includes communications devices for funds management executing the functions of a mobile telephone according to the GSM/UMTS/CDMA communications standards, including contactless identification technology elements such as RFID/NFC or similar.

3. EPS according to Claims 1 and 2, **characterized in that** the communications devices for funds management include a software application based on the STK standard, for example, as a means of displaying the USSD user interface.

4. EPS according to Claim 1, **characterized in that** the external banking hardware infrastructure unit includes automated banking service hardware means, integrated with the PU by means of communications software interfaces, with the capability of issuing cheques, constructed on the basis of POS terminals and ATMs or other specialized automated settlement and cash service devices, including RFID/NFC technology elements or similar.

5. EPS according to Claim 1, **characterized in that** the external automated settlement systems infrastructure unit includes external banking systems, billing systems and processing centres of clients' and partners' structures, and remote automatic and semi-automatic hardware and software settlement combinations, mutually integrated with the PU.

6. EPS according to Claims 1 and 5, **characterized in that** the settlement combinations used are fixed settlement and cash service points, settlement and cash service points in authorized credit institutions, and authorized settlement and cash service devices, including RFID/NFC contactless identification technology elements or similar.

7. EPS according to Claim 1, **characterized in that** the communications and data transmission infrastructure unit includes a USSD gateway software and hardware combination, for processing incoming and outgoing requests and commands according to a standard set of signal protocols of mobile communications networks according to the GSM/UMTS/CDMA standard, generated by communications devices for funds management ("user initiated") and by the EPS PU ("network initiated").

8. EPS according to Claims 1 and 7, **characterized in that** the communications interfaces used also include interfaces according to various communications and data transmission standards, providing communications interaction between the structural elements of the EPS via mobile communications networks according to the GSM/UMTS/CDMA standards, via IMT-Advanced local wireless network systems, PSTNs in combination with IVR systems, fibre optical data transmission channels, or other wired and wireless communications and data transmission channels which are functionally similar to the aforementioned, providing remote interaction according to various protocols, also including the HTTP application-level data transmission protocol, the SMPP specification protocol, the SMPP Developers' Forum protocol for interaction of external applications with elements of the infrastructure of cellular mobile communications network operators, and the SOAP protocol for the exchange of structured messages in a distributed computing environment.

9. EPS according to Claim 1, **characterized in that** the PU, being a software and hardware combination with cluster architecture, is composed of hardware and software components interacting with each other in a single environment of servers and databases under the control of the operations centre according to the hierarchy of priorities for the execution of functional tasks imposed by the architecture of the PU and the functional rules of the system, including automatic interchangeability of communications and data transmission interfaces for the execution of EFT.

10. EPS according to Claims 1 and 9, **characterized in that** the communications and data transmission subsystem in the PU, having a middle hierarchical priority level in the PU structure, is constructed so as to be capable of coordinating the uninterrupted interaction of elements of the external infrastructure environment of the EPS with the PU, the structural components of the PU and the communications networks, local control of the state of the communication and data transmission networks, including Internet channels, and integrated external sources of service applications, including the provision of service procedures through Internet interfaces, for the execution of the EFT process and its associated electronic document exchange, and it also includes an operator's enquiry and service facility with an interactive automated voice guidance system.

11. EPS according to Claims 1 and 9 - 10, **characterized in that** the interactive automated voice guidance system used is an IVR system included in the hardware and software resources of the operator's enquiry and service facility.

12. EPS according to Claims 1 and 9 - 11, **characterized in that** the communications networks used are, for example, GSM/UMTS/CDMA and PSTN networks.

13. EPS according to Claims 1 and 9 - 11, **characterized in that** the integrated external sources of service applications used are, for example, service sources based on VoIP and RFID/NFC technologies.

14. EPS according to Claims 1 and 9, **characterized in that** the operations centre, being a software environment with the highest hierarchical priority level in the structure of the EPS PU, is constructed so as to be capable of implementing the functional rules of the EFT by interaction with the structural components of the EPS PU, including monitoring of rule-based processes, payment requests, and the state of the hardware, software and communications components of the system, provision of failure protection against software and hardware faults, and renewal of software in all elements of the system.

15. EPS according to Claims 1 and 9, **characterized in that** the transaction processing server, having a middle hierarchical priority level in the PU structure, is constructed so as to be capable of receiving and processing the data required for the formation of payments and accounting statements specified by the functional rules of the system, by interaction with the structural components of the PU, including informing all user groups of the system of the outcomes of completed payments and the balance indicators of their electronic accounts.

16. EPS according to Claims 1 and 9, **characterized in that** the database management system, having a middle hierarchical priority level in the PU structure, is constructed so as to be capable of providing interaction of the structural components of the PU with the databases and controlling servers according to the functional rules for the execution of EFT.

17. EPS according to Claims 1 and 9, **characterized in that** the accounting subsystem, having a middle hierarchical priority level in the PU structure, is constructed so as to be capable of identifying users, authenticating the EFT management devices, authorizing transactions, checking the account balances of system users, forming and registering information on payment procedures supplied to the users by the system, by interaction with the transaction processing server.

18. EPS according to Claims 1 and 9, **characterized in that** the external infrastructure applications subsystem, having a middle hierarchical priority level in the PU structure, is constructed so as to be capable of executing EFT by interaction with external hardware and software elements of the infrastructure of the EPS, including hardware identification of service users and acceptance, formation and execution of payment requests, and provision of interaction between the EPS PU and the mutually integrated external infrastructures of banking systems and hardware and software settlement combinations.

19. EPS according to Claims 1 and 9, **characterized in that** the authorization subsystem, having a middle hierarchical priority level in the PU structure, includes a database of the authorization parameters of users, associated with communications devices for funds management, together with identification and authorization parameters of other payment systems, as required by the security rules of the EPS for execution of EFT.

20. EPS according to Claims 1, 9 and 19, **characterized in that** the other payment systems used are, for example, Visa/MasterCard systems and similar systems.

21. EPS according to Claims 1 and 9, **characterized in that** the authentication subsystem, having the lowest hierarchical priority level in the PU structure, is constructed so as to be capable of authenticating a user, or an element of the external banking hardware infrastructure of the EPS associated with the user, on the basis of authentication parameters and operations required by the security rules of the EPS.

22. EPS according to Claims 1, 9 and 21, **characterized in that** the authentication parameters used are, for example, a password, an electronic digital signature (EDS), an encryption key, a checksum and/or other parameters specified by the functional rules of the EPS.

23. EPS according to Claims 1 and 9, **characterized in that** the residents' register subsystem, having the lowest hierarchical priority level in the PU structure, includes a database of registered resident users of payment services and their associated communications devices for funds management, according to the registration rules of the local EPS, including information on each resident user concerning completed payment operations and the present location and state of accounts, and is constructed so as to be capable of recording them according to identification parameters as required by the functional rules of the EPS.

24. EPS according to Claims 1, 9 and 23, **characterized in that** the identification parameters used are, for example, the SIM parameters associated with the user's electronic account in the system and/or IMSI, TMSI or IMEI parameters.

25. EPS according to Claims 1 and 9, **characterized in that** the non-resident's register subsystem, having the lowest hierarchical priority level in the PU structure, includes a database of registered non-resident users of payment services and their associated communications devices for funds management, according to the registration rules of the EPS, including information on the payment operations completed by each non-resident user and the present location and state of his electronic accounts in the system, required for the implementation of the functional rules of the EPS, and is constructed so as to be capable of keeping records according to identification parameters associated with the non-resident users.

26. EPS according to Claims 1, 9, and 23 - 25, **characterized in that** the identification parameters of resident and non-resident users include prefixes of SIM card numbers associated with the communications devices for funds management declared as the user's identifier at the time of registration in the EPS.

27. EPS according to Claims 1 and 9, **characterized in that** the hardware elements register subsystem, having the lowest hierarchical priority level in the PU structure, includes a database of the identification parameters of the elements of the external banking hardware infrastructure of the EPS and the external funds management devices infrastructure, with the capability of creating three lists during the execution of EFT, according to the rules on counteracting the illegal exchange of funds, these lists classifying the identifiers of said hardware elements and funds management devices, namely a "white list", signifying "use permitted", a "grey list", signifying "some problems with the rules for use", and a "black list", signifying "use prohibited".

28. EPS according to Claims 1 and 9, **characterized in that** the clearing subsystem, having a middle hierarchical priority level in the PU structure, includes a database for clearing requests and reports and is constructed so as to be capable of providing mutual settlements according to financial circumstances between the EPS and the parties to the EFT from among elements of the external automated accounting systems infrastructure, in accordance with the clearing rules established for participants in EFT, on the basis of clearing requests/reports generated by the subsystem in the process of execution of EFT, including their storage and modification in the database, and also transmission, according to the rules for execution of EFT, to mutually integrated clearing or settlement systems of elements of the external automated settlement systems of the EPS for the execution of direct bank transactions.
